# EUROPEAN PATENT APPLICATION

(11) **EP 4 345 667 A1**
(43) Date of publication of application: **03.04.2024**
(21) Application number: 23185953.9
(22) Date of filing: 17.07.2023
(51) Int. Cl.: G06F 21/57

(54) **DEVICES, SYSTEMS, AND METHODS FOR SECURELY LOADING EMBEDDED SOFTWARE USING A MANIFEST**

(30) Priority: 30.09.2022 US 202217956940
(71) Applicant: General Electric Company, Schenectady, NY 12345 (US); BAE Systems Controls Inc., Endicott, New York 13760 (US)
(72) Inventor: GILTON, Jeffrey, Schenectady, 12345 (US); PFENNINGER, Matthew, Schenectady, 12345 (US); NICHOLS, Douglas, Schenectady, 12345 (US); SEIDEL, Russell, Endicott, 13760 (US)
(74) Representative: Openshaw & Co.

(57) **Abstract**

A device (116) for initializing an engine control system of an aircraft includes a processor (118) and memory modules (120-1) that cause the processor to authenticate (410) a boot loader comprising one or more stages, authenticate (605) a manifest containing hashes of one or more software components, load (705) a first set of software components from among the one or more software components onto a non-transitory computer-readable medium, calculate (708) a hash of each software component of the first set of software components, authenticate (710) the first set of software components by comparing the calculated hash of each software component of the first set of software components to the hash of a corresponding software component in the manifest, and execute (735) the first set of software components in response to authentication of the one or more software components.

## Description

This invention was made with Government support under Contract No. W58RGZ-19-C-0003 awarded by the Department of the Army. The Government has certain rights in the invention.

### FIELD

The present specification generally relates to devices, systems, and methods for securely initializing an engine control system, and more particularly, to devices, systems, and methods for securely loading embedded software using a manifest.

### BACKGROUND

Aircraft systems may incorporate a plurality of sensors that sense various conditions relating to the aircraft components, which are used by software programs to detect, diagnose, or predict issues and/or faults in real time, even as the aircraft is being operated (e.g., flying). When a component of an aircraft system is reset or powered on, the software programs may be loaded onto a memory device, and a processing device of the aircraft system may subsequently execute the software programs once they are loaded onto the memory device.

Prior to loading the software programs onto the memory device and prior to executing the software programs, an initialization protocol may be executed. During the initialization protocol, the software programs may be authenticated using various cryptographic authentication methods in order to, for example, confirm that the software was not subjected to tampering. Once the software programs are authenticated, the software programs may be loaded onto the memory device for subsequent execution by the processing device.

However, when the aircraft systems are reset, the engine of the aircraft may still be operating. Since the software programs utilized for controlling and monitoring the engine are not executed until after the initialization protocol is completed, the operation of the engine may be negatively impacted if the initialization protocol is not completed within a certain period of time.

### BRIEF DESCRIPTION OF THE DRAWINGS

The embodiments set forth in the drawings are illustrative and exemplary in nature and are not intended to limit the subject matter defined by the claims. The following detailed description of the illustrative embodiments can be understood when read in conjunction with the following drawings, where like structure is indicated with like reference numerals and in which:
FIG. 1 schematically depicts an example aircraft system according to one or more embodiments shown and described herein;
FIG. 2 schematically depicts a functional block diagram of illustrative internal components of an aircraft system according to one or more embodiments shown and described herein;
FIG. 3 schematically illustrates a functional block diagram of illustrative modules contained within the engine control system according to one or more embodiments shown and described herein;
FIG. 4 depicts a flow diagram of an illustrative method of authenticating a first stage boot loader module of the engine control system according to one or more embodiments shown and described herein;
FIG. 5 depicts a flow diagram of an illustrative method of authenticating a memory loader module in communication with the engine control system according to one or more embodiments shown and described herein;
FIG. 6 depicts a flow diagram of an illustrative method of authenticating a second stage boot loader module and a manifest of the engine control system according to one or more embodiments shown and described herein; and
FIG. 7 depicts a flow diagram of an illustrative method of executing a second stage boot loader module of the engine control system according to one or more embodiments shown and described herein.

### DETAILED DESCRIPTION

Referring to the figures, embodiments of the present disclosure are generally related to devices, systems, and methods for securely loading embedded software using a manifest. As described below in further detail, in order to securely load software for an aircraft system (and/or one or more other embedded systems), a manifest may be first be authenticated using an asymmetric authentication method.

A manifest may include a list of software components to be loaded. The software components to be loaded may include executable object code and data items. The manifest may also contain a secure hash of each software component to be loaded. As such, the manifest may have a significantly smaller file size than the file size of each software component to be loaded. Therefore, asymmetric authentication of the manifest may be performed significantly faster than asymmetric authentication of the software components to be loaded.

Once the manifest has been authenticated using asymmetric authentication, the individual software components listed in the manifest may be authenticated using the secure hashes from the manifest. In particular, a hash may be calculated of each software component to be loaded and each hash may be compared against the hash of the software component in the manifest. Because calculating a hash can be performed significantly faster than performing asymmetric authentication, this process allows the software components to be authenticated more quickly than by performing asymmetric authentication of each software component, while still ensuring that the software components have not been subjected to, for example, malicious tampering.

While the present disclosure relates primarily to an engine control system, it should be understood that the devices, systems, and methods described herein may be used for other embedded systems in aircraft. Furthermore, the engine control systems described herein may include or be a part of an embedded system in some embodiments. Other illustrative embedded systems include, but are not limited to, a microcontroller including one or more central processing units (CPUs). In addition, the devices, systems, and methods described herein may be used for non-aircraft systems such as control systems for manufacturing plants and the like. Embodiments disclosed herein have a technical effect of quickly authenticating software components to be loaded and/or executed by an engine control system.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosure. As used in the specification and in the claims, the singular form of 'a', 'an', and 'the' include plural referents unless the context clearly dictates otherwise.

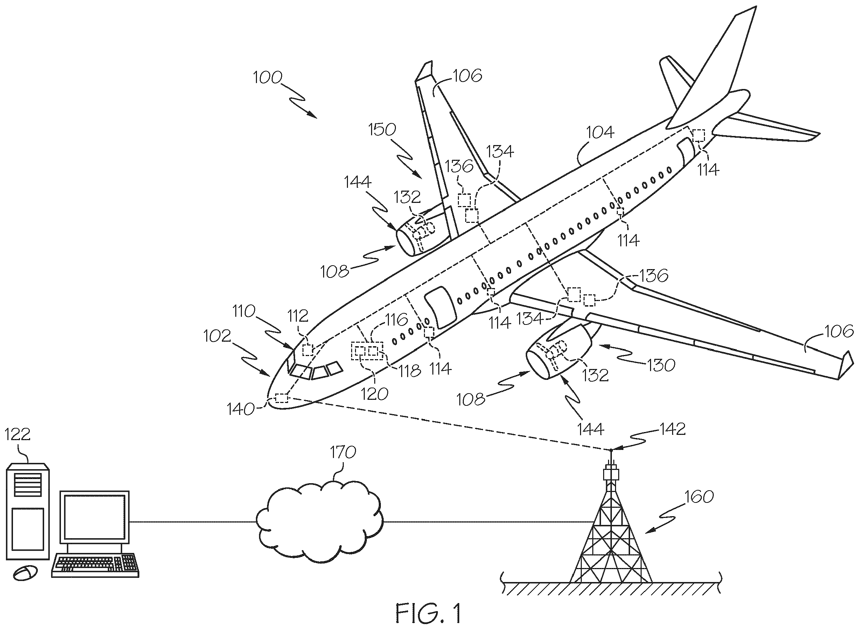

Referring now to FIG. 1, an illustrative aircraft system 100 is schematically depicted. In the illustrated embodiment of FIG. 1, the aircraft system 100 generally includes an aircraft 102, which may include a fuselage 104, wing assemblies 106, and one or more engines 108. While FIG. 1 depicts the aircraft 102 as being a fixed-wing craft having two wing assemblies 106 with one engine 108 mounted on each wing assembly 106 (two engines 108 total), other configurations are contemplated. For example, other configurations may include more than two wing assemblies 106, more than two engines 108 (e.g., trijets, quadjets, etc.), engines 108 that are not mounted to a wing assembly 106 (e.g., mounted to the fuselage 104, mounted to the tail, mounted to the nose, etc.), non-fixed wings (e.g., rotary wing aircraft), and/or the like.

As illustrated in FIG. 1, the aircraft 102 may include the engines 108 coupled to the wing assemblies 106 and/or the fuselage 104, a cockpit 110 positioned in the fuselage 104, and the wing assemblies 106 extending outward from the fuselage 104. A control mechanism 112 for controlling the aircraft 102 is included in the cockpit 110 and may be operated by a pilot located therein. It should be understood that the term "control mechanism" as used herein is a general term used to encompass all aircraft control components, particularly those typically found in the cockpit 110.

In some embodiments, a plurality of aircraft control systems 114 that enable proper operation of the aircraft 102 may also be included in the aircraft 102, as well as an engine control system 116. The aircraft control systems 114 may generally be any systems that effect control of one or more components of the aircraft 102, such as, for example, cabin pressure controls, elevator controls, rudder controls, flap controls, spoiler controls, landing gear controls, heat exchanger controls, and/or the like. In some embodiments, the avionics of the aircraft 102 may be encompassed by one or more of the aircraft control systems 114. In various embodiments, the engine control system 116 may be operably coupled to the other controllers of the aircraft 102, the plurality of aircraft control systems 114, and the engines 108. While the embodiment depicted in FIG. 1 specifically refers to the engine control system 116 controlling the engines 108, it should be understood that other controllers may also be included within the aircraft 102 to control various other systems that do not specifically relate to the engines 108.

As shown in the illustrated embodiment of FIG. 1, the engine control system 116 may include one or more processing devices 118 and/or one or more memories 120. In some embodiments, the one or more memories 120 may include a non-transitory computer-readable medium, such as random access memory (RAM), read-only memory (ROM), flash memory, or one or more different types of portable electronic memory, such as discs, DVDs, CD-ROMs, or the like, or any suitable combination of these types of memory. The one or more processing devices 118 may carry out programming instructions stored on the one or more memories 120, thereby causing operation of the engine control system 116. That is, the one or more processing devices 118 and the one or more memories 120 within the engine control system 116 may be operable to carry out the various processes described herein with respect to the engine control system 116.

Non-limiting example processes include, but are not limited to, operating various components of the aircraft 102 (such as the engine 108 and/or components thereof), monitoring the health of various components of the aircraft 102 (e.g., the engine 108 and/or components thereof), monitoring operation of the aircraft 102 and/or components thereof, installing software programs, installing software updates, and/or the like. As another non-limiting example, the processes may include diagnosing and/or predicting one or more engine system faults in the aircraft 102. Diagnosed and/or predicted faults may include, but are not limited to, improper operation of components, failure of components, indicators of future failure of components, and/or the like.

The programming instructions run by the engine control system 116 (e.g., executed by the one or more processing devices 118 and stored within the one or more memories 120) may include a computer program product that includes machine-readable media for carrying or having machine-executable instructions or data structures. Such machine-readable media may be any available media, which can be accessed by a general purpose or special purpose computer or other machine with a processor. Generally, such a computer program may include routines, programs, objects, components, data structures, algorithms, and/or the like that have the technical effect of performing particular tasks or implementing particular abstract data types. Machine-executable instructions, associated data structures, and programs represent examples of program code for executing the exchange of information as disclosed herein. Machine-executable instructions may include, for example, instructions and data, which cause a general purpose computer, special purpose computer, or special purpose processing machine to perform a certain function or group of functions. In some embodiments, the computer program product may be provided by a component external to the engine control system 116 and installed for use by the engine control system 116. The computer program product may generally be updatable via a software update that is received from one or more components of the aircraft system 100, such as, for example, a remote computing device 122. The software is generally updated by the engine control system 116 by installing the update such that the update supplements and/or overwrites one or more portions of the existing program code for the computer program product. The software update may allow the computer program product to more accurately diagnose and/or predict faults, provide additional functionality not originally offered, and/or the like.

In some embodiments, each of the engines 108 may include a fan 144 and one or more engine sensors 130 for sensing various characteristics of the fan 144 and the engine 108 during operation of the engines 108. Illustrative examples of the one or more engine sensors 130 include, but are not limited to, a fan speed sensor 132, a temperature sensor 134, and a pressure sensor 136. The fan speed sensor 132 is generally a sensor that measures a rotational speed of the fan 144 within the engine 108. The temperature sensor 134 may be a sensor that measures a fluid temperature within the engine 108 (e.g., an engine air temperature), a temperature of fluid (e.g., air) at an engine intake location, a temperature of fluid (e.g., air) within a compressor, a temperature of fluid (e.g., air) within a turbine, a temperature of fluid (e.g., air) within a combustion chamber, a temperature of fluid (e.g., air) at an engine exhaust location, a temperature of cooling fluids and/or heating fluids used in heat exchangers in or around the engine 108, and/or the like. The pressure sensor 136 may be a sensor that measures a fluid pressure (e.g., air pressure) in various locations in and/or around the engine 108, such as, for example, a fluid pressure (e.g., air pressure) at an engine intake, a fluid pressure (e.g., air pressure) within a compressor, a fluid pressure (e.g., air pressure) within a turbine, a fluid pressure (e.g., air pressure) within a combustion chamber, a fluid pressure (e.g., air pressure) at an engine exhaust location, and/or the like.

In some embodiments, each of the engines 108 may have a plurality of engine sensors 130 associated therewith (including one or more fan speed sensors 132, one or more temperature sensors 134, and/or one or more pressure sensors 136). That is, more than one of the same type of engine sensor 130 may be used to sense characteristics of an engine 108 (e.g., an engine sensor 130 for each of the different areas of the same engine 108). In some embodiments, one or more of the engine sensors 130 may be utilized to sense characteristics of more than one of the engines 108 (e.g., a single engine sensor 130 may be used to sense characteristics of two engines 108). The engines 108 may further include additional components not specifically described herein, and may include one or more additional engine sensors 130 incorporated with or configured to sense such additional components in some embodiments.

In embodiments, each of the engine sensors 130 (including, but not limited to, the fan speed sensors 132, the temperature sensors 134, and the pressure sensors 136) may be communicatively coupled to one or more components of the aircraft 102 such that signals and/or data pertaining to one or more sensed characteristics are transmitted from the engine sensors 130 for the purposes of determining, detecting, and/or predicting a fault, as well as completing one or more other actions in accordance with software programming that requires sensor information. As indicated by the dashed lines extending between the various engine sensors 130 (e.g., the fan speed sensors 132, the temperature sensors 134, and the pressure sensors 136) and the aircraft control systems 114 and the engine control system 116 in the embodiment depicted in FIG. 1, the various engine sensors 130 may be communicatively coupled to the aircraft control systems 114 and/or the engine control system 116 in some embodiments. As such, the various engine sensors 130 may be communicatively coupled via wires or wirelessly to the aircraft control systems 114 and/or the engine control system 116 to transmit signals and/or data to the aircraft control systems 114 and/or the engine control system 116.

As a non-limiting example, while the aircraft 102 is being operated, the control mechanism 112 may be utilized to operate one or more of the aircraft control systems 114. Various engine sensors 130, including, but not limited to, the fan speed sensors 132, the temperature sensors 134, and/or the pressure sensors 136 may output data relevant to various characteristics of the engine 108 and/or the other aircraft control systems 114. The engine control system 116 may utilize inputs from the control mechanism 112, the fan speed sensors 132, the temperature sensors 134, the pressure sensors 136, the various aircraft control systems 114, one or more databases, and/or information from airline control, flight operations, or the like to diagnose, detect, and/or predict faults. Once a fault has been diagnosed, detected, and/or predicted, an indication may be provided on the aircraft 102 and/or to the ground system 160.

In the illustrated embodiment, the aircraft system 100 may include an interconnectivity of components coupled via a network 170, which may include a wide area network, such as the internet, a local area network (LAN), a mobile communications network, a public service telephone network (PSTN) and/or other network and may be configured to electronically connect components. The illustrative components that may be connected via the network 170 include, but are not limited to, a ground system 160 in communication with the aircraft 102 (e.g., via a ground wireless communications link 142 and an aircraft wireless communications link 140) and the remote computing device 122 configured to, for example, provide software updates to various components of the aircraft system 100 may transmit data such that data and/or information pertaining to the fault may be transmitted off the aircraft 102. The aircraft wireless communications link 140 may generally be any air-to-ground communication system now known or later developed. Illustrative examples of the aircraft wireless communications link 140 include, but are not limited to, a transponder, a very high frequency (VHF) communication system, an aircraft communications addressing and reporting system (ACARS), a controller-pilot data link communications (CPDLC) system, a future air navigation system (FANS), and/or the like.

In some embodiments, the ground system 160 may be a transmission system located on the ground that is capable of transmitting and/or receiving signals to/from the aircraft 102. That is, the ground system 160 may include the ground wireless communications link 142 that is communicatively coupled to the aircraft wireless communications link 140 wirelessly to transmit and/or receive signals and/or data. As a non-limiting example, the ground system 160 may be an air traffic control (ATC) tower and/or one or more components or systems thereof. Accordingly, the ground wireless communications link 142 may be a VHF communication system, an ACARS unit, a CPDLC system, FANS, and/or the like. Using the ground system 160 and the aircraft wireless communications link 140, the various non-aircraft components depicted in the embodiment of FIG. 1 may be communicatively coupled to the aircraft 102, even in instances where the aircraft 102 is airborne and in flight, thereby allowing for communication of faults detected by the engine control system 116 and on-demand transmission of software and/or software updates whenever such software and/or software updates may be needed. However, it should be understood that the embodiment depicted in FIG. 1 is merely illustrative. In other embodiments, the aircraft 102 may be communicatively coupled to the various other components of the aircraft system 100 when on the ground and physically coupled to one of the components of the aircraft system 100.

While an example aircraft 102 has been described and illustrated in FIG. 1, the aircraft 102 may have other configurations and/or may be other aerial vehicles in other embodiments. As a non-limiting example, the aircraft 102 may be a high speed compound rotary-wing aircraft with supplemental translational thrust systems, an aircraft with dual contra-rotating propellers, an aircraft with a coaxial rotor system, an aircraft with a turboprop engine, a tilt-rotor aircraft, a tilt-wing aircraft, a conventional take-off and landing aircraft, and other turbine-driven machines in other embodiments.

While the embodiment of FIG. 1 specifically relates to components within an aircraft 102, the present disclosure is not limited to such. That is, the various components depicted with respect to the aircraft 102 may be incorporated within various other types of craft. For example, the various components described herein with respect to the aircraft 102 may be present in watercraft, spacecraft, automobiles, rail vehicles, and/or the like without departing from the scope of the present disclosure.

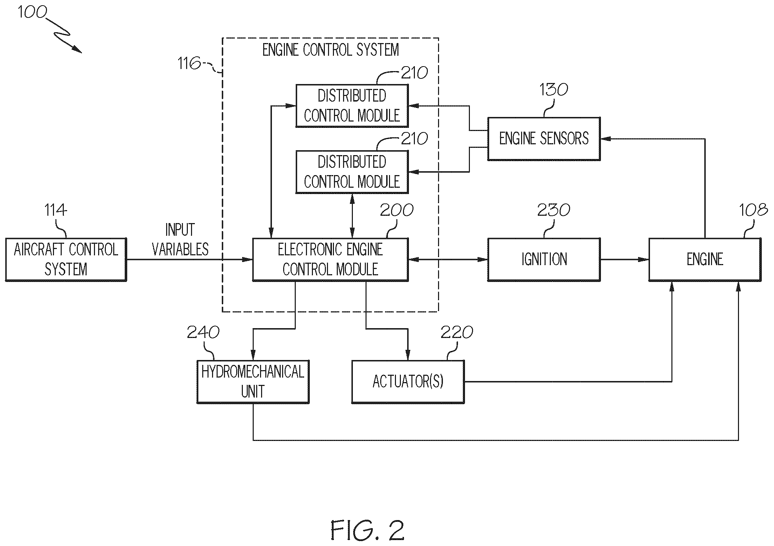

With reference to FIG. 2, functional block diagram including the engine control system 116 is schematically depicted. As illustrated in FIG. 2, the engine control system 116 may be, but is not limited to, a full authority digital engine control (FADEC) system. The FADEC system generally has full authority over operating parameters of the engines 108 and cannot be manually overridden. The operating parameters of the FADEC system can be modified by installing and/or updating software. As such, the FADEC system can be programmatically controlled to determine engine limitations, receive engine health reports, and receive engine maintenance reports and/or the like to undertake certain measures and/or actions in certain conditions.

In some embodiments, the engine control system 116 includes an electronic engine controller module (EECM) 200, as well as one or more distributed control modules (DCMs) 210 configured to control various aspects of performance of the engines 108. While the illustrated embodiment depicts two DCMs 210, it should be understood that any number of DCMs 210 may be included within the engine control system 116 in other embodiments.

As described above, the engine sensors 130 may output data relevant to various characteristics of the engine 108. The engine control system 116 may utilize inputs from the fan speed sensors 132, the temperature sensors 134, the pressure sensors 136, or the like to diagnose, detect, and/or predict faults. As non-limiting examples, the engine control system 116 may analyze the data output by the engine sensors 130 (e.g., the fan speed sensors 132, the temperature sensors 134, the pressure sensors 136, etc.), over a period of time to determine drifts, trends, steps, or spikes in the operation of the engines 108.

In some embodiments, the engine control system 116 may receive a plurality of input variables of a current flight condition, including, but not limited to, air density, throttle lever position, and/or the like from the aircraft control systems 114. The inputs are received, analyzed, and used to determine operating parameters such as, but not limited to, fuel flow, stator vane position, bleed valve position, and/or the like. As a non-limiting example, in response to receiving a signal indicating a change in the throttle lever position, the engine control system 116 may output a signal causing one or more actuators 220 to adjust a parameter of the engine 108 accordingly. As another non-limiting example, in response to receiving an input variable corresponding to turning on or turning off the engine 108, the engine control system 116 may activate or deactivate the engines 108 by controlling an ignition 230. As yet another non-limiting example, the engine control system 116 may output a signal to control a hydromechanical fuel control unit 240 in response to receiving an input variable corresponding to adjusting an amount of fuel provided to the engine 108.

While not illustrated in FIG. 2, it should be understood that the engine control system 116 may be in communication with other components of the aircraft 102. As non-limiting examples, the engine control system 116 may be communicatively coupled to an alternator, reverser solenoids and switches, engine condition monitoring signals, and/or the like in some embodiments.

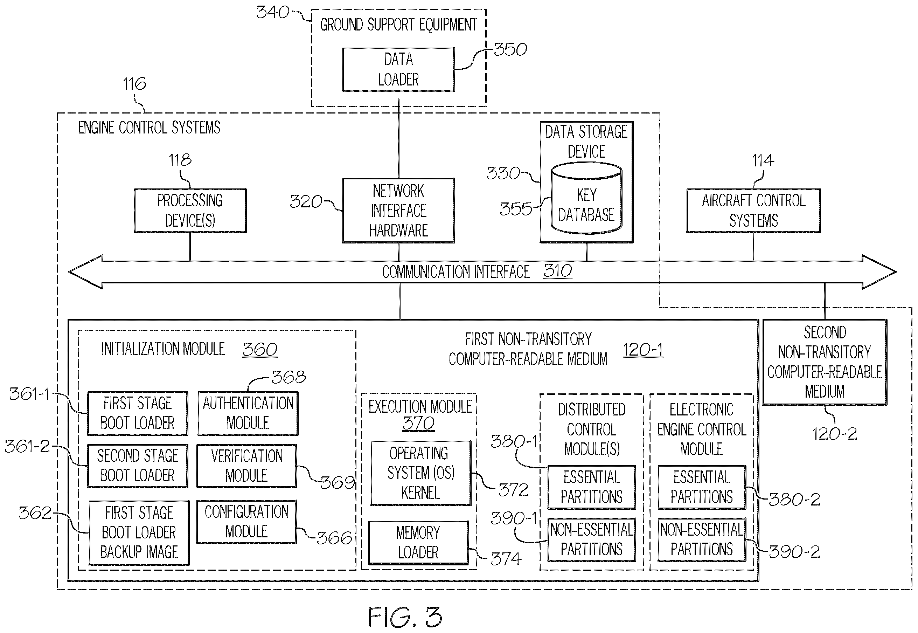

Referring now to FIG. 3, an example embodiment of the engine control system 116 is schematically depicted showing additional hardware components contained therein. The engine control system 116 generally includes the one or more processing devices 118, a first memory 120-1 and a second memory 120-2 of the one or more memories 120, a communication interface 310, network interface hardware 320, and a data storage device 330. The components of the engine control system 116 may be physically and/or communicatively coupled through the communication interface 310. While the illustrated embodiment of FIG. 3 illustrates the first memory 120-1 and the second memory 120-2, it should be understood that the engine control system 116 may have any number of memory components. As a non-limiting example, the first memory 120-1 and the second memory 120-2 may be replaced with a single memory component in some embodiments.

The communication interface 310 is formed from any medium that is configured to transmit a signal. As non-limiting examples, the communication interface 310 is formed of conductive wires, conductive traces, optical waveguides, or the like. The communication interface 310 may also refer to the expanse in which electromagnetic radiation and their corresponding electromagnetic waves are propagated. Moreover, the communication interface 310 may be formed from a combination of mediums configured to transmit signals. In one embodiment, the communication interface 310 includes a combination of conductive traces, conductive wires, connectors, and buses that cooperate to permit the transmission of electrical data signals to and from the various components of the engine control system 116. Additionally, it is noted that the term "signal" means a waveform (e.g., electrical, optical, magnetic, mechanical or electromagnetic) configured to travel through a medium, such as direct current (DC), alternating current (AC), sinusoidal-wave, triangular-wave, square-wave, vibration, and the like.

The network interface hardware 320 may include and/or be configured to communicate with any wired or wireless networking hardware, including an antenna, a modem, a LAN port, a wireless fidelity (Wi-Fi) card, a WiMax card, a long term evolution (LTE) card, a ZigBee card, a Bluetooth chip, a USB card, mobile communications hardware, and/or other hardware for communicating with other networks and/or devices. As a non-limiting example, the network interface hardware 320 may include hardware enabling the engine control system 116 to communicate with ground support equipment (GSE) 340 and/or a data loader 350 of the GSE 340. As used herein, the GSE 340 refers to external equipment used to support and test the engine control system 116 and/or other components of the aircraft 102. As a non-limiting example, the data loader 350 of the GSE 340 may be configured to provide software updates to the engine control system 116 and download data obtained by the engine control system 116 during a flight. As another non-limiting example, the GSE 340 may include production support equipment for restricted data monitoring, test support equipment for comprehensive data monitoring and changing adjustable parameters, and integration test rigs for system and software testing. In some embodiments, the GSE 340 may be connected to the engine control system 116 via the ground system 160 and the aircraft wireless communications link 140.

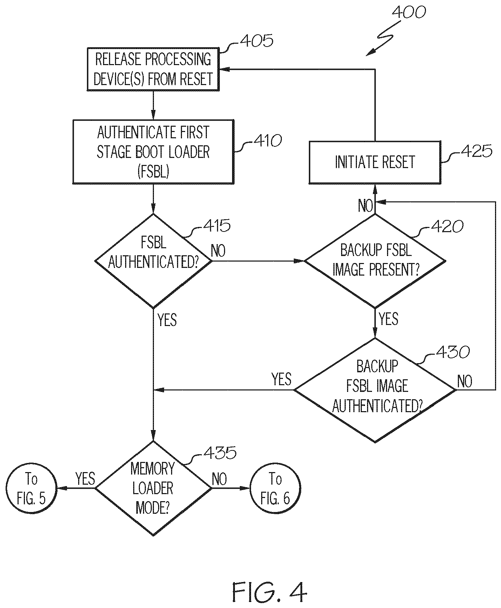

The data storage device 330, which includes a key database 355, is communicatively coupled to the one or more processing devices 118. As a non-limiting example, the data storage device 330 may include one or more database servers that support NoSQL, MySQL, Oracle, SQL Server, NewSQL, or the like. As described below in further detail with reference to FIGS. 4-7, the key database 355 may include a plurality of private and/or public keys that are utilized to cryptographically authenticate the engine control system 116 during an initialization protocol. In embodiments, the data storage device 330 may also store a manifest containing information about software to be loaded and/or executed. The manifest may also contain hashes of software to be loaded and/or executed. The hashes of the software included in the manifest may be used to authenticate software, as disclosed in further detail below.

As described above, the one or more processing devices 118, each of which may be a computer processing unit (CPU), may receive and execute machine-readable instructions stored in the first memory 120-1 and the second memory 120-2. As a non-limiting example, the one or more processing devices 118 may be one of a shared processor circuit, dedicated processor circuit, or group processor circuit. As described herein, the term "shared processor circuit" refers to a single processor circuit that executes some or all machine-readable instructions from the multiple modules. As described herein, the term "group processor circuit" refers to a processor circuit that, in combination with additional processor circuits, executes some or all machine-executable instructions from the multiple modules of the memories 120. References to multiple processor circuits encompass multiple processor circuits on discrete dies, multiple processor circuits on a single die, multiple cores of a single processor circuit, multiple threads of a single processor circuit, or a combination of the above.

The first memory 120-1 and the second memory 120-2 are communicatively coupled to the one or more processing devices 118. As a non-limiting example, each of the first memory 120-1 and the second memory 120-2 may be one of a shared memory circuit, dedicated memory circuit, or group memory circuit. As described herein, the term "shared memory circuit" refers to a single memory circuit that stores some or all machine-readable instructions from multiple modules, which are described below in further detail. As described herein, the term "group memory circuit" refers to a memory circuit that, in combination with additional memories, stores some or all machine-readable instructions from the multiple modules. Non-limiting examples of the first memory 120-1 and the second memory 120-2 include random access memory (including static random access memory (SRAM), dynamic RAM (DRAM), and/or other types of random access memory), read-only memory (ROM), flash memory, registers, compact discs (CD), digital versatile discs (DVD), and/or other types of storage components.

As shown in FIG. 3, the first memory 120-1 includes a plurality of logic modules. Each of the logic modules may be embodied as a computer program, firmware, or hardware, as an example. An illustrative example of logic modules include, but is not limited to, an initialization module 360 and an execution module 370. In some embodiments, the initialization module 360 includes one or more boot stage loaders 361, a first stage boot loader backup image 362, a configuration module 366, an authentication module 368, and a verification module 369. In the example of FIG. 3, the initialization module 360 includes a first stage boot loader 361-1 and a second stage boot loader 361-2. However, in other examples, the initialization module 360 may include a boot loader with any number of stages.

In some embodiments, the execution module 370 includes an operating system (OS) kernel 372 and a memory loader 374. Additional illustrative examples of the logic modules include the one or more DCMs 210 and the EECM 200. Each of the logic modules may include one or more programming instructions that are executable by the one or more processing devices 118, such as the processes described in FIGS. 4-7.

With continued reference to FIG. 3, the engine control system 116 is illustrated as being turned off or in a state immediately after the engine control system 116 is reset via a hardware or software command. Initially, the first memory 120-1 stores the initialization module 360, the one or more DCMs 210, and the EECM 200. Once the engine control system 116 is turned on and/or released from reset, the engine control system 116 may initiate an initialization protocol in order to load the one or more DCMs 210 and the EECM 200 onto the second memory 120-2 for subsequent execution by the one or more processing devices 118. As described below in further detail with reference to FIGS. 4-7, when the initialization module 360 is executed, the one or more processing devices 118 may cryptographically authenticate and/or verify a manifest containing hashes of software to be loaded using asymmetric authentication methods. Once the manifest is authenticated, the software components to be loaded may be authenticated by calculating hashes of the software components and comparing the calculated hashes to the hashes in the manifest.

Because the manifest file is relatively small, compared to the software components themselves, asymmetric authentication of the manifest is limited to just one file (the manifest) and can be performed relatively quickly. Once the manifest has been authenticated, a chain of trust may be established with respect to the manifest. Accordingly, a secure hash of each software component to be loaded may be calculated and compared to the hashes of the software components in the manifest. Calculating a secure hash requires much less processing power and execution time than asymmetric authentication. Thus, using the methods described herein, software to be loaded and/or executed by the engine control system 116 may be authenticated quickly and securely.

With reference to FIGS. 4-7, flow diagrams of an illustrative method 400 of executing an initialization protocol are depicted. Referring to FIGS. 3-4, at block 405, the engine control system 116 releases the one or more processing devices 118 from reset via a hardware or software command (e.g., the engine control system 116 is released from reset once a power supply and clock source (not shown) of the engine control system 116 are stable after the hardware or software reset command). At block 410, the one or more processing devices 118 authenticate a first stage boot loader 361-1 by executing the programming instructions of the authentication module 368. Furthermore, at block 415, the one or more processing devices 118 determine whether the first stage boot loader 361-1 is authenticated by executing the programming instructions of the authentication module 368.

By executing the programming instructions of the authentication module 368 at block 410 and block 415, the one or more processing devices 118 may perform various cryptographic authentication algorithms including, but not limited to, symmetric key encryption (e.g., 256-bit symmetric encryption, 3DES, AES, etc.), asymmetric key encryption (e.g., 4096-bit asymmetric encryption, RSA, ECDSA, etc.), and/or hashing algorithms (384-bit hash, HMAC-SHA256, etc.).

If the one or more processing devices 118 determine that the first stage boot loader 361-1 is not authenticated ("NO" at block 415), the method 400 proceeds to block 420; otherwise, if the one or more processing devices 118 determine that the first stage boot loader 361-1 is authenticated ("YES" at block 415), the method 400 proceeds to block 435. At block 420, the one or more processing devices 118 determine whether the initialization module 360 includes the first stage boot loader backup image 362 (e.g., a copy of the first stage boot loader 361-1). If so ("YES" at block 420), the method 400 proceeds to block 430; otherwise ("NO" at block 420), the method 400 proceeds to block 425, where the engine control system 116 is reset and the method then proceeds to block 405. In some embodiments, the engine control system 116 temporarily discontinues receiving electrical power from a power supply (not shown) and removes any machine-readable instructions stored on the second memory 120-2 when the engine control system 116 is reset.

At block 430, the one or more processing devices 118 load the boot loader backup image 362, authenticate the boot loader backup image 362, and determine whether the first stage boot loader backup image 362 is authenticated by executing the programming instructions of the authentication module 368. As described above, the one or more processing devices 118 perform various cryptographic authentication algorithms including, but not limited to, symmetric key encryption, asymmetric key encryption, and/or hashing algorithms to authenticate whether the first stage boot loader backup image 362. If the first stage boot loader backup image 362 is authenticated ("YES" at block 430), the method 400 proceeds to block 435; otherwise ("NO" at block 430), the method 400 proceeds to block 425.

At block 435, the one or more processing devices 118 begin executing the first stage boot loader 361-1. In the illustrated embodiment, executing the first stage boot loader 361-1 includes determining whether the engine control system 116 is in a memory loader mode or a normal engine control mode. As described herein, the engine control system 116 is in the memory loader mode when the engine control system 116 is connected to the data loader 350 of the GSE 340 via the network interface hardware 320. In the memory loader mode, the engine control system 116 is configured to load software received from the GSE 340. Alternatively, in the normal engine control mode, the engine control system 116 is configured to execute software that has been previously loaded.

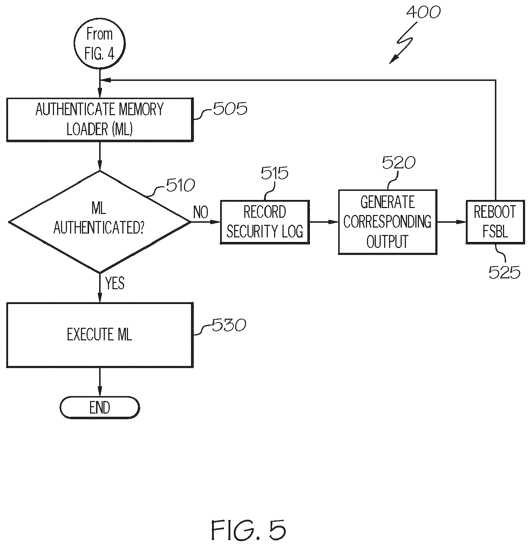

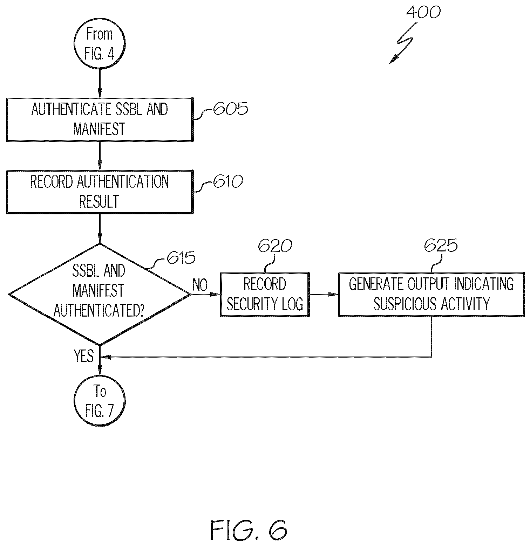

If the engine control system 116 is in the memory loader mode ("YES" at block 435), the method 400 proceeds to block 505 illustrated in FIG. 5. Alternatively, if the engine control system 116 is in the normal engine control mode ("NO" at block 435), the method 400 proceeds to block 605 illustrated in FIG. 6.

It should be understood that in other embodiments, beginning the execution of the first stage boot loader 361-1 (e.g., block 435 in FIG. 4) may include and/or be preceded by other functions. As a non-limiting example, executing the first stage boot loader 361-1 may be preceded by a power on self-test (POST) of the one or more processing devices 118.

With reference to FIGS. 3 and 5, at block 505 (e.g., when block 435 in FIG. 4 determines the engine control system 116 is in the memory loader mode), the one or more processing devices 118 authenticate the memory loader 374 by executing the programming instructions of the authentication module 368. Furthermore, at block 510, the one or more processing devices 118 determine whether the memory loader 374 is authenticated by executing the programming instructions of the authentication module 368. By executing the programming instructions of the authentication module 368 at block 505 and block 510, the one or more processing devices 118 perform various cryptographic authentication algorithms including, but not limited to, symmetric key encryption, asymmetric key encryption, and/or hashing algorithms.

If the memory loader 374 is authenticated ("YES" at block 510), the method 400 proceeds to block 530, where the one or more processing devices 118 execute the memory loader 374. Upon execution, the memory loader 374 may receive the load file transmitted by the GSE 340. The load file may include software components to be loaded by the engine control system 116. The load file may also include a manifest. The manifest may include a list of the software components (e.g., executable object code and data items) included in the load file as well as certain data about the software components (e.g., where the software components are located, file sizes, and the like). The manifest may also include a hash of each software component included in the load file. In embodiments, the load file may also include digital signatures for the manifest and the executable object code and a verification method for the data items.

The software components contained in the load file may be partitioned into essential application software and non-essential application software. During execution of the software, explained in further detail below, the essential application software may be initialized right away, whereas the non-essential application software may be initialized after periodic execution of the essential application software. After execution of the memory loader 374, the manifest may be stored in the data storage device 330, the essential application software may be stored in the essential partitions 380-1 and 380-2, and the non-essential application software may be stored in the non-essential partitions 390-2 and 390-2.

Still referring to FIGS. 3 and 5, if the memory loader 374 is not authenticated (no at block 510), the method 400 proceeds to block 515. At block 515, the one or more processing devices 118 record a security log indicating the failed authentication of the memory loader 374 and then generate a corresponding output at block 520. In some embodiments, the corresponding output may be a hardware output consistent with a FADEC standard and/or protocol. In other embodiments, the corresponding output may be other hardware outputs, such as an activation of a light-emitting diode (LED) circuit and/or other similar circuits of the engine control system 116.

At block 525, the one or more processing devices 118 reboot the first stage boot loader 361-1, and then the method 400 proceeds to block 505. As a non-limiting example, rebooting the first stage boot loader 361-1 may include executing machine-readable instructions that cause one or more processing devices 118 to repeat the authentication of the memory loader 374 described at block 505 and block 510. Accordingly, in some embodiments, the method 400 may not complete the initialization protocol if the memory loader 374 is not authenticated, thereby enhancing the security of the engine control system 116 by preventing an unauthenticated external device from initializing and/or manipulating the engine control system 116.

Referring now to FIGS. 3 and 6, at block 605 (e.g., when block 435 in FIG. 4 determines that the engine control system 116 is in the normal engine control mode), the one or more processing devices 118 authenticate the second stage boot loader 361-2 and the manifest by executing the programming instructions of the authentication module 368. By executing the programming instructions of the authentication module 368 at block 605, the one or more processing devices 118 perform various cryptographic authentication algorithms including, but not limited to, symmetric key encryption, asymmetric key encryption, and/or hashing algorithms to authenticate the second stage boot loader 361-2 and the manifest.

As described above, the authentication module 368 may authenticate the manifest using an asymmetric authentication method. In some embodiments, the manifest is signed with two digital signatures. However, in some embodiments, the manifest may be signed with one digital signature or with more than two digital signatures. In some embodiments, the authentication module 368 may authenticate the manifest by verifying one or more digital signatures of the manifest. In some examples, the manifest may be authenticated using one or more of the techniques described above for authenticating the second stage boot loader 361-2.

Performing asymmetric authentication may take a significant amount of time to complete. However, because the manifest only contains a list of software components and hashes of the software components, the manifest has a significantly smaller file size than the software components themselves. Thus, performing asymmetric authentication of the manifest may take significantly less time than it would take to perform asymmetric authentication of each of the software components.

Once the manifest has been authenticated, the software components may be authenticated by computing hashes of the software components and comparing the computed hashes to the hashes from the manifest, as disclosed herein. Calculating a secure hash may be performed significantly faster than performing asymmetric authentication (e.g., about 1500 times faster). Therefore, the method disclosed herein may securely authenticate software components in a timely manner.

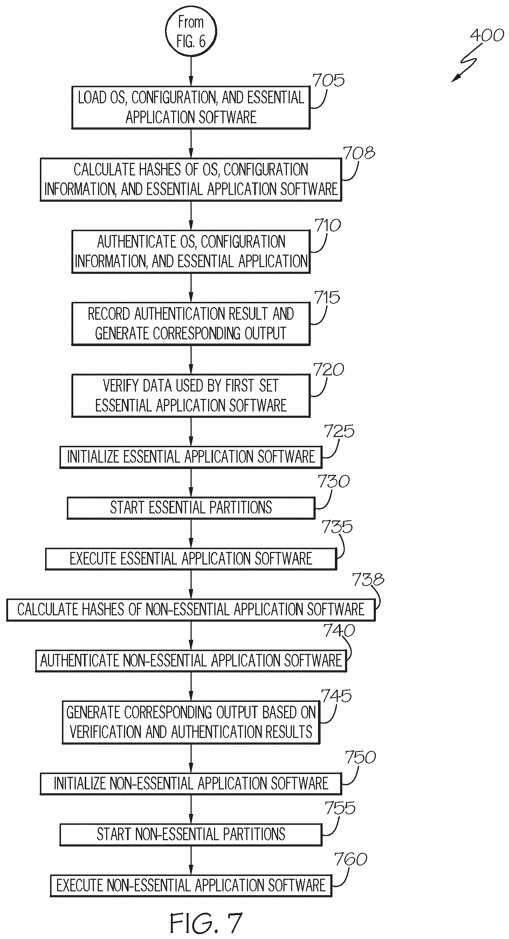

Referring still to FIG. 6, at block 610, the one or more processing devices 118 record the authentication result obtained at block 605. At block 615, the one or more processing devices 118 determine whether the second stage boot loader 361-2 and the manifest was authenticated. If the second stage boot loader 361-2 and the manifest were authenticated (yes at block 615), the method 400 proceeds to block 705 in FIG. 7 and the second stage boot loader 361-2 is executed.

If the second stage boot loader 361-2 and/or the manifest were not authenticated (no at block 615), the method 400 proceeds to block 620, where the one or more processing devices 118 record a security log indicating the failed authentication of the second stage boot loader 361-2 and/or the manifest. At block 625, the one or more processing devices 118 generate an output indicating potential suspicious activity at block 625 (e.g., a hardware output, such as an activation of an LED circuit and/or other similar circuits of the engine control system 116) and then proceeds to block 705 in FIG. 7. Accordingly, in some embodiments, the initialization protocol may be completed when the second stage boot loader 361-2 is not authenticated, and an operator of the aircraft 102 may be notified of the failed authentication based on the hardware output at block 625. In some embodiments, the initialization module 360 of the engine control system 116 may not include the second stage boot loader 361-2. In these embodiments, the steps of FIG. 6 may be ignored and, upon determination that the engine control system 116 is not in memory loader mode at block 435 of FIG. 4, control may proceed to block 705 in FIG. 7.

With reference to FIGS. 3 and 7, an illustrative overview of executing the second stage boot loader 361-2 is depicted. As described above, executing the second stage boot loader 361-2 begins in response to authenticating the first stage boot loader 361-1 (as illustrated in FIGS. 3 and 4) and authenticating the memory loader 374 (as illustrated in FIGS. 3 and 5). Furthermore, executing the second stage boot loader 361-2 begins in response to authenticating the first stage boot loader 361-1 (as illustrated in FIGS. 3 and 4) and authentication of the second stage boot loader 361-2 (as illustrated in FIGS. 3 and 6).

Referring now to FIGS. 3 and 7, at block 705 illustrated in FIG. 7, one or more processing devices 118 load the operating system onto the second memory 120-2 by executing the OS kernel 372. Furthermore, at block 705, the one or more processing devices 118 load the essential application software associated with the essential partitions 380-1 and 380-2 onto the second memory 120-2. As used herein, the essential application software associated with the essential partitions 380 refer to application software related to controlling the engine 108, such as returning the engine 108 to normal operation when the one or more processing devices 118 are released from reset.

Additionally, at block 705, the one or more processing devices 118 load configuration information associated with the essential application software by executing the configuration module 366. As used herein, configuration information refers to digital signatures associated with executable object code and a verification method to be employed for verifying data items stored in the data storage device 330.

At block 708, the one or more processing devices 118 execute the authentication module 368 to calculate a hash of the operating system, the configuration information, and the essential application software. Then, at block 710, the one or more processing devices 118 continue executing the authentication module to authenticate the operating system, the configuration information, and the essential application software by comparing the calculated hashes of each of the software components to the secure hashes from the manifest.

As discussed above, the manifest contains a hash of each software component to be loaded and/or executed. Accordingly, the authentication module 368 can authenticate the software components (e.g., the operation system, the configuration information, and the essential application software) by comparing the calculated hash of each software component to the corresponding hash from the manifest. If the calculated hash of a software component matches the corresponding hash from the manifest, the one or more processing devices 118 may determine that the software component is authenticated. Alternatively, if the calculated hash of a software component does not match the corresponding hash from the manifest, the one or more processing devices 118 may determine that the software component is not authenticated. At block 715, the one or more processing devices 118 records the authentication result and generates a corresponding output.

At block 720, the one or more processing devices 118 verify the data items utilized by the essential application software by executing the verification module 369. As non-limiting examples, the verification module 369 may include instructions corresponding to a data type validation, a range and constraint validation, a code and cross-reference validation, a structured validation, and/or any other suitable data verification methods.

At block 725, the operating system initializes the essential application software. At block 730, the operating system starts the essential partitions 380-1 and 380-2. At block 735, the essential partitions 380-1 and 380-2 execute the essential application software within an allocated time. By executing the essential application software within an allocated period of time (e.g., a predetermined period of time), the engine 108 is less prone to damage during the initialization protocol, as critical engine control software can be executed during the initialization protocol.

At block 738, the one or more processing devices 118 one or more processing devices 118 load the non-essential application software and calculate a hash of each non-essential application software. Then, at block 740, the one or more processing devices 118 authenticate the non-essential application software by comparing each calculated hash to the corresponding hash from the manifest. If the calculated hash of a software component matches the corresponding hash from the manifest, the one or more processing devices 118 may determine that the software component is authenticated. Alternatively, if the calculated has of a software component does not match the corresponding hash from the manifest, the one or more processing devices 118 may determine that the software component is not authenticated. At block 745, the one or more processing devices 118 records the authentication result and generates a corresponding output.

At block 750, the operating system initializes the non-essential application software. At block 755, the operating system starts the non-essential partitions 390-1 and 390-2. At block 760, the non-essential partitions 390-1 and 390-2 execute the non-essential application software within an allocated time.

The functional blocks and/or flowchart elements described herein may be translated into machine-readable instructions. As non-limiting examples, the machine-readable instructions may be written using any programming protocol, such as: descriptive text to be parsed (e.g., such as hypertext markup language, extensible markup language, etc.), (ii) assembly language, (iii) object code generated from source code by a compiler, (iv) source code written using syntax from any suitable programming language for execution by an interpreter, (v) source code for compilation and execution by a just-in-time compiler, etc. Alternatively, the machine-readable instructions may be written in a hardware description language (HDL), such as logic implemented via either a field programmable gate array (FPGA) configuration or an application-specific integrated circuit (ASIC), or their equivalents. Accordingly, the functionality described herein may be implemented in any conventional computer programming language, as pre-programmed hardware elements, or as a combination of hardware and software components.

It should now be understood that this disclosure provides for devices, systems, and methods for securely loading embedded software using a manifest. A manifest including a list of software components to be loaded and a secure hash of each software component may be first authenticated using an asymmetric authentication method. After the manifest is authenticated using asymmetric authentication, the individual software components listed in the manifest may be authenticated using the secure hashes of the software components from the manifest.

Once the manifest has been authenticated using asymmetric authentication, the individual software components listed in the manifest may be authenticated using the secure hashes from the manifest. Because the manifest has been authenticated using asymmetric authentication, the secure hashes from the manifest may be trusted. As such, the software components can be quickly authenticated using the secure hashes from the manifest. Thus, the software components can be quickly authenticated while ensuring their authenticity.

While the present disclosure relates primarily to an engine control system, it should be understood that the devices, systems, and methods described herein may be used for other embedded systems in aircraft. Furthermore, the engine control systems described herein may include or be a part of an embedded system in some embodiments. Other illustrative embedded systems include, but are not limited to, a microcontroller including one or more central processing units (CPUs). In addition, the devices, systems, and methods described herein may be used for non-aircraft systems such as control systems for manufacturing plants and the like. Embodiments disclosed herein have a technical effect of quickly authenticating software components to be loaded and/or executed by an engine control system.

It will be apparent to those skilled in the art that various modifications and variations can be made without departing from the spirit or scope of the disclosure. Since modifications, combinations, sub-combinations and variations of the disclosed embodiments incorporating the spirit and substance of the disclosure may occur to persons skilled in the art, the disclosure should be construed to include everything within the scope of the appended claims and their equivalents.

Further aspects of the disclosure are provided by the subject matter of the following clauses:

A device for initializing an engine control system of an aircraft, the device comprising: one or more processors; and one or more non-transitory memory modules communicatively coupled to the one or more processors and storing machine-readable instructions that, when executed, cause the one or more processors to perform at least the following: authenticate a boot loader comprising one or more stages; authenticate a manifest in response to authentication of the boot loader wherein the manifest contains hashes of one or more software components; and in response to authentication of and the manifest: loading a first set of software components from among the one or more software components onto a non-transitory computer-readable medium; calculating a hash of each software component of the first set of software components; authenticating the first set of software components by comparing the calculated hash of each software component of the first set of software components to the hash of a corresponding software component in the manifest; and executing the first set of software components in response to authentication of the one or more software components.

The device of any preceding clause, wherein the instructions further cause the one or more processors to authenticate the manifest using asymmetric authentication.

The device of any preceding clause, wherein the instructions further cause the one or more processors to at least: upon determination that the engine control system is in a memory loader mode, authenticate a memory loader communicatively coupled to the one or more processors.

The device of any preceding clause, wherein the instructions further cause the one or more processors to at least: determine that the boot loader is not authenticated; load a backup image of the boot loader; and authenticate the backup image of the boot loader.

The device of any preceding clause, wherein the first set of software components are associated with one or more essential partitions, and the instructions further cause the one or more processors to at least: after executing the first set of software components, load a second set of software components onto the non-transitory computer-readable medium, wherein the second set of software components are associated with one or more non-essential partitions; calculate a hash of each software component of the second set of software components; authenticate the second set of software components by comparing the calculated hash of each software component of the second set of software components to the hash of the corresponding software component in the manifest; and execute the second set of software components in response to authentication of the one or more software components.

The device of any preceding clause, wherein the first set of software components comprises an operating system, application software, and configuration information associated with the application software.

The device of any preceding clause, wherein: the one or more essential partitions are associated with application partitions that control an engine of the aircraft; and the one or more non-essential partitions are associated with the application partitions that do not control the engine of the aircraft.

The device of any preceding clause, wherein the instructions further cause the one or more processors to at least: determine that a second stage boot loader is not authenticated; and generate, an output indicating that the second stage boot loader is not authenticated.

A method for initializing an engine control system of an aircraft, the method comprising: authenticating, by one or more processors, a boot loader comprising one or more stages; authenticating, by the one or more processors, a manifest in response to authentication of the boot loader wherein the manifest contains hashes of one or more software components; and in response to authentication of the manifest: loading, by the one or more processors, a first set of software components from among the one or more software components onto a non-transitory computer-readable medium; calculating, by the one or more processors, a hash of each software component of the first set of software components; authenticating, by the one or more processors, the first set of software components by comparing the calculated hash of each software component of the first set of software components to the hash of a corresponding software component in the manifest; and executing, by the one or more processors, the first set of software components in response to authentication of the one or more software components.

The method of any preceding clause, further comprising authenticating the manifest using asymmetric authentication.

The method of any preceding clause, further comprising: upon determination that the engine control system is in a memory loader mode, authenticating, by the one or more processors, a memory loader communicatively coupled to the one or more processors.

The method of any preceding clause, further comprising: determining, by the one or more processors, that the boot loader is not authenticated; loading, by the one or more processors, a backup image of the boot loader; and authenticating, by the one or more processors, the backup image of the boot loader.

The method of any preceding clause, wherein the first set of software components are associated with one or more essential partitions, the method further comprising: after executing the first set of software components, loading, by the one or more processors, a second set of software components onto the non-transitory computer-readable medium, wherein the second set of software components are associated with one or more non-essential partitions; calculating, by the one or more processors, a hash of each software component of the second set of software components; authenticating, by the one or more processors, the second set of software components by comparing the calculated hash of each software component of the second set of software components to the hash of the corresponding software component in the manifest; and executing, by the one or more processors, the second set of software components in response to authentication of the one or more software components.

The method of any preceding clause, wherein the first set of software components comprises an operating system, application software, and configuration information associated with the application software.

The method of any preceding clause, wherein: the one or more essential partitions are associated with application partitions that control an engine of the aircraft; and the one or more non-essential partitions are associated with the application partitions that do not control the engine of the aircraft.

The method of any preceding clause, further comprising: determining, by the one or more processors, that a second stage boot loader is not authenticated; and generating, by the one or more processors, an output indicating that the second stage boot loader is not authenticated.

An engine control system comprising: one or more processors; and one or more non-transitory memory modules communicatively coupled to the one or more processors and storing machine-readable instructions that, when executed, cause the one or more processors to perform at least the following: authenticate a boot loader comprising one or more stages; authenticate a manifest in response to authentication of the boot loader wherein the manifest contains hashes of one or more software components; and in response to authentication of the manifest: load a first set of software components from among the one or more software components onto a non-transitory computer-readable medium; calculate a hash of each software component of the first set of software components; authenticate the first set of software components by comparing the calculated hash of each software component of the first set of software components to the hash of a corresponding software component in the manifest; and execute the first set of software components in response to authentication of the one or more software components.

The engine control system of any preceding clause, wherein the instructions further cause the one or more processors to authenticate the manifest using asymmetric authentication.

The engine control system of any preceding clause, wherein the instructions further cause the one or more processors to: upon determination that the engine control system is in a memory loader mode, authenticate a memory loader communicatively coupled to the one or more processors.

The engine control system of any preceding clause, wherein the instructions further cause the one or more processors to: determine that the boot loader is not authenticated; load a backup image of the boor loader; and authenticate the backup image of the boot loader.

The engine control system of any preceding clause, wherein the first set of software components are associated with one or more essential partitions, and the instructions further cause the one or more processors to: after executing the first set of software components, load a second set of software components onto the non-transitory computer-readable medium, wherein the second set of software components are associated with one or more non-essential partitions; calculate a hash of each software component of the second set of software components; authenticate the second set of software components by comparing the calculated hash of each software component of the second set of software components to the hash of the corresponding software component in the manifest; and execute the second set of software components in response to authentication of the one or more software components.

The engine control system of any preceding clause, wherein the first set of software components comprises an operating system, application software, and configuration information associated with the application software.

The engine control system of any preceding clause, wherein the one or more essential partitions are associated with application partitions that control an engine of the aircraft; and the one or more non-essential partitions are associated with the application partitions that do not control the engine of the aircraft.

The engine control system of any preceding clause, wherein the instructions further cause the one or more processors to at least: determine that a second stage boot loader is not authenticated; and generate an output indicating that the second stage boot loader is not authenticated.

## Claims

1. A device (116) for initializing an engine control system of an aircraft, the device comprising:
one or more processors (118); and
one or more non-transitory memory modules (120-1) communicatively coupled to the one or more processors and storing machine-readable instructions that, when executed, cause the one or more processors to perform at least the following:
authenticate (410) a boot loader comprising one or more stages;
authenticate (605) a manifest in response to authentication of the boot loader wherein the manifest contains hashes of one or more software components; and
in response to authentication of and the manifest:
load (705) a first set of software components from among the one or more software components onto a non-transitory computer-readable medium;
calculate (708) a hash of each software component of the first set of software components;
authenticate (710) the first set of software components by comparing the calculated hash of each software component of the first set of software components to the hash of a corresponding software component in the manifest; and
execute (735) the first set of software components in response to authentication of the one or more software components.

2. The device of claim 1, wherein the instructions further cause the one or more processors to authenticate (605) the manifest using asymmetric authentication.

3. The device of any preceding claim, wherein the instructions further cause the one or more processors to at least:
upon determination that the engine control system is in a memory loader mode, authenticate (505) a memory loader communicatively coupled to the one or more processors.

4. The device of any preceding claim, wherein the instructions further cause the one or more processors to at least:
determine (415) that the boot loader is not authenticated;
load (430) a backup image of the boot loader; and
authenticate (430) the backup image of the boot loader.

5. The device of any preceding claim, wherein the first set of software components comprises an operating system, application software, and configuration information associated with the application software.

6. The device of any preceding claim, wherein the first set of software components are associated with one or more essential partitions, and the instructions further cause the one or more processors to at least:
after executing the first set of software components, load (738) a second set of software components onto the non-transitory computer-readable medium, wherein the second set of software components are associated with one or more non-essential partitions;
calculate (738) a hash of each software component of the second set of software components;
authenticate (740) the second set of software components by comparing the calculated hash of each software component of the second set of software components to the hash of the corresponding software component in the manifest; and
execute (760) the second set of software components in response to authentication of the one or more software components.

7. The device of claim 6, wherein:
the one or more essential partitions are associated with application partitions that control an engine of the aircraft; and
the one or more non-essential partitions are associated with the application partitions that do not control the engine of the aircraft.

8. The device of any preceding claim, wherein the instructions further cause the one or more processors to at least:
determine (615) that a second stage boot loader is not authenticated; and
generate (615), an output indicating that the second stage boot loader is not authenticated.

9. A method for initializing an engine control system of an aircraft, the method comprising:
authenticating (410), by one or more processors, a boot loader comprising one or more stages;
authenticating (605), by the one or more processors, a manifest in response to authentication of the boot loader wherein the manifest contains hashes of one or more software components; and
in response to authentication of the manifest:
loading (705), by the one or more processors, a first set of software components from among the one or more software components onto a non-transitory computer-readable medium;
calculating (708), by the one or more processors, a hash of each software component of the first set of software components;
authenticating (710), by the one or more processors, the first set of software components by comparing the calculated hash of each software component of the first set of software components to the hash of a corresponding software component in the manifest; and
executing (735), by the one or more processors, the first set of software components in response to authentication of the one or more software components.

10. The method of claim 9, further comprising authenticating (605) the manifest using asymmetric authentication.

11. The method of claim 9 or 10, further comprising:
upon determination that the engine control system is in a memory loader mode, authenticating (505), by the one or more processors, a memory loader communicatively coupled to the one or more processors.

12. The method of any of claims 9 to 11, further comprising:
determining (415), by the one or more processors, that the boot loader is not authenticated;
loading (430, by the one or more processors, a backup image of the boot loader; and
authenticating (430), by the one or more processors, the backup image of the boot loader.

13. The method of any of claims 9 to 12, wherein the first set of software components are associated with one or more essential partitions, the method further comprising:
after executing the first set of software components, loading (738), by the one or more processors, a second set of software components onto the non-transitory computer-readable medium, wherein the second set of software components are associated with one or more non-essential partitions;
calculating (738), by the one or more processors, a hash of each software component of the second set of software components;
authenticating (740), by the one or more processors, the second set of software components by comparing the calculated hash of each software component of the second set of software components to the hash of the corresponding software component in the manifest; and
executing (760), by the one or more processors, the second set of software components in response to authentication of the one or more software components.

14. The method of claim 13, wherein:
the one or more essential partitions are associated with application partitions that control an engine of the aircraft; and
the one or more non-essential partitions are associated with the application partitions that do not control the engine of the aircraft.

15. The method of any of claims 9 to 14, further comprising:
determining (615), by the one or more processors, that a second stage boot loader is not authenticated; and
generating (625), by the one or more processors, an output indicating that the second stage boot loader is not authenticated.
